(19) Europäisches Patentamt
European Patent Office
Office européen des brevets

(11) Publication number: 0 208 044
A2

(12) # EUROPEAN PATENT APPLICATION

(21) Application number: 86100014.9

(22) Date of filing: 02.01.86

(51) Int. Cl.⁴: C 08 K 5/00
C 08 L 27/06
//(C08K5/00, 5:37, 5:58)

(30) Priority: 03.07.85 US 751392

(43) Date of publication of application: 14.01.87 Bulletin 87/3

(84) Designated Contracting States: BE DE FR GB IT NL

(71) Applicant: PENNWALT CORPORATION
Pennwalt Building Three Parkway
Philadelphia Pennsylvania 19102(US)

(72) Inventor: Bohen, Joseph M.
540 Norwyck Drive
King of Prussia, PA 19406(US)

(74) Representative: Kraus, Walter, Dr. et al,
Patentanwälte Kraus, Weisert & Partner
Thomas-Wimmer-Ring 15
D-8000 München 22(DE)

(54) **Heat stabilizers for halogenated resins.**

(57) Mixtures of alkali and alkaline earth metal salts of mercaptans or mercapto acids with specified sulfur-bridged organotin compounds are disclosed herein as heat stabilizers for halogenated resins.

EP 0 208 044 A2

0208044

# HEAT STABILIZERS FOR HALOGENATED RESINS

IR-2548

## BACKGROUND

As is well known to those skilled in the art, various halogen-containing resins, particularly vinyl halide polymers which include homopolymers and copolymers of vinyl chloride degrade when subjected to heat over an extended period of time as evidenced by darkening of the resin and by an increase in brittleness. These defects may render the resin unsuitable for many uses since the darkening produces an unsightly appearance, and the increased brittleness may cause mechanical failures.

The use of sulfur-containing organotin compounds as heat stabilizers for halogen-containing resins is well known in the art. U.S. Patent No. 4,115,352 (dated September 19, 1978, and incorporated herein by reference) discloses and claims a composition of matter of a mixture of (a) an alkali or alkaline earth metal salt of a mercaptan or mercapto acid and (b) a sulfur-containing organotin compound having a $-\overset{|}{\underset{|}{C}}-\overset{|}{\underset{|}{Sn}}-S-$ group, or a sulfur-containing antimony compound having a $\overset{|}{\underset{|}{Sb}}-S$ group, said mixture having a weight ratio of (a) to (b) ranging between about 0.05:1 and about 3:1 which composition is particularly effective for such purposes.

The present invention provides an improved composition over that described in U.S. 4,115,352 wherein the composition includes either (i) a sulfur-bridged organotin mercaptide or (ii) a combination of at least one organotin sulfide and at least one organotin mercaptide is present in place of (b) above.

## STATEMENT OF THE INVENTION

The present invention provides a novel and useful stabilizer composition of matter comprising a mixture of (a) an alkali or alkaline earth metal salt of a mercaptan or mercapto acid and (b) either (i) a sulfur-bridged organotin mercaptide or (ii) a combination of at least one organotin sulfide and at least one organotin mercaptide having a $-\overset{|}{\underset{|}{C}}-\overset{|}{\underset{|}{Sn}}-S$ group, said composition having a weight ratio of (a) to (b) ranging between about 0.05:1 and about 3:1, with the

proviso that up to about 99.5% by weight of the organotin sulfide identified above can be replaced by (c) at least one organotin mercaptide and with the further proviso that up to 96% by weight of (a) can be replaced by (d) an overbased organic complex of an alkali or alkaline earth metal base.

All the components of the claimed composition not disclosed in U.S. 4,115,352 referred to above are old in the art and the methods of preparing them are well known. For instance, organotin mercaptides having a sulfur-bridge linking two tin atoms (and use of such materials as heat stabilizers for polyvinyl chloride) are disclosed in U.S. 3,565,930, 3,565,931, 3,869,487, 4,062,881, 4,120,845, 4,124,618 and 4,181,671. The particular sulfur-bridged organotin mercaptides, which are operable in the present invention, however, are described by the following formula:

$$\begin{array}{c} (R^1)_a Sn(SR^2)_{3-a} \\ | \\ (S)_m \\ | \\ (R^3)_b Sn(SR^4)_{3-b} \end{array}$$

wherein a and b are independently either 1 or 2; $R^1$ and $R^3$ are hydrocarbon radicals having 1-18 carbon atoms and selected from the group consisting of alkyl, cycloalkyl, aryl, mixed alkyl-aryl and said hydrocarbon radicals optionally having substituents selected from the groups consisting of -CN, $OR^5$, $-\overset{O}{\overset{\|}{C}}R^5$, or $-\overset{O}{\overset{\|}{C}}-OR^5$ where $R^5$ is a 1-20 carbon atom alkyl, alkenyl, cycloalkyl or mixed alkyl-aryl group; $R^2$ and

$R^4$ are hydrocarbon radicals (e.g. alkyl, cycloalkyl, aryl or mixed alkyl-aryl) of 1-22 carbon atoms optionally substituted by halogen, $-XH$, $-XR^5$, $-\overset{X}{\overset{\|}{C}}-R^5$, $X\overset{Y}{\overset{\|}{C}}-R^5$ or $\overset{Y}{\overset{\|}{C}}-XR^5$ where $R^5$ is as defined above and both X and Y are independently selected from oxygen (O) and sulfur (S); and m ranges from 1 to about 10.

A wide variety of organotin sulfides is disclosed in U.S. 2,789,103, 2,858,325, 3,123,070, 3,021,302, 3,424,712 (the latter two patents disclosing the use of such sulfides alone or with a phenolic compound as a stabilizer for polyvinyl chloride) and 3,424,717 (which teaches the use of such sulfides in combination with an organotin mercaptide and a phenolic compound as a stabilizer for polyvinyl chloride).

The stabilizer composition of the present invention is useful as a component of a halogenated resin to provide stability against deterioration of the resin by heat; the stabilizer component can be used over a range of about 0.05 to about 10 phr (that is, parts by weight per 100 parts of halogenated resin). The preferred range is about 0.25 to about 5.0 phr. The chemical nature of the halogened resin is not critical and typical suitable embodiments are disclosed in U.S. 4,115,352. Preferably the resin is a vinyl halide resin, specifically, a vinyl chloride resin.

The components of the stabilizer composition are generally combined in the weight percent amounts as follows:

| Wt % | |
|---|---|
| 20-90% | sulfur-bridged organotin mercaptide(s) |
| 2-60% | alkali or alkaline earth metal salt of a mercaptan or mercapto acid |
| 0-60% | overbased organic complex of an alkali or alkaline earth metal base |
| 100% | |

or

| | |
|---|---|
| 30-90% | organotin mercaptide(s) |
| 2-20% | organotin sulfide(s) |
| 2-50% | alkali or alkaline earth metal salt of a mercaptan or mercapto acid |
| 0-60% | overbased organic complex of an alkali or alkaline earth metal base |
| 100% | |

Preferred ranges are:

| Wt % | |
|---|---|
| 45-80% | sulfur-bridged organotin mercaptide(s) |
| 5-55% | alkali or alkaline earth metal salt of a mercaptan or mercapto acid |
| 5-50% | overbased organic complex of an alkali or alkaline earth metal base |
| 100% | |

or

| | |
|---|---|
| 40-80% | organotin mercaptide(s) |
| 5-20% | organotin sulfide(s) |
| 5-40% | alkali or alkaline earth metal salt of a mercaptan or mercapto acid |
| 5-50% | overbased organic complex of an alkali or alkaline earth metal base |
| 100% | |

In the examples which follow the overbased organic complex employed was prepared as described in Example 38 of U.S. 4,115,352. As an alkaline earth metal salt of an organic mercaptan either Compound I [barium bis(isooctyl thioglycolate)], Compound II [barium bis(2-mercaptoethyl stearate], Compound III [barium bis(dodecyl mercaptide)], Compound IV [barium bis(2-mercaptoethyl oleate)], or Compound V [barium bis(2-mercaptoethyl tallate)] was employed. An organotin sulfide, Compound VI (methyltin sesquisulfide), Compound VII (dimethyltin sulfide), Compound VIII (dibutyltin sulfide), or Compound IX (butyltin sesquisulfide) was used. Four embodiments of sulfur-bridged organotin mercaptides were used, for example:

Compound X

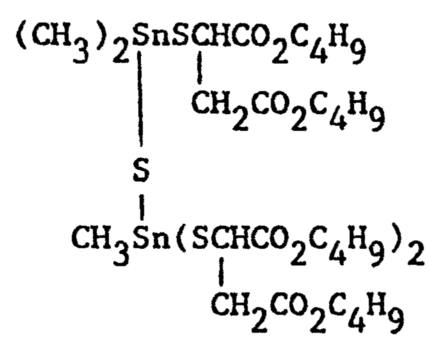

Compound XI

$$(CH_3)_2SnSCH_2CH_2O_2CC_{17}H_{35}$$
$$|$$
$$S$$
$$|$$
$$CH_3Sn(SCH_2CH_2O_2CC_{17}H_{35})_2$$

Compound XII

$$CH_3Sn(SCH_2CH_2O_2CC_{17}H_{35})_2$$
$$|$$
$$S$$
$$|$$
$$CH_3Sn(SCH_2CH_2O_2CC_{17}H_{33})_2$$

or

Compound XIII

$$CH_3Sn(SCH_2CO_2C_8H_{17})_2$$
$$|$$
$$S$$
$$|$$
$$(CH_3)_2SnSCH_2CO_2C_8H_{17}$$

Ten organotin mercaptoacid esters used for illustrative purposes were Compound XIV [(dimethyltin bis(isooctyl thioglycolate)], Compound XV [methyltin tris(isooctyl thioglycolate)], Compound XVI [methyltin tris(2-mercaptoethyl stearate)], Compound XVII [dimethyltin bis(2-mercaptoethyl stearate)], Compound XVIII [methyltin tris(2-mercaptoethyl oleate)], Compound XIX [dimethyltin bis(2-mercaptoethyl oleate)], Compound XX [butyltin tris(2-mercaptoethyl tallate)], Compound XXI [dibutyltin bis(mercaptoethyl tallate)], Compound XXII [dibutyltin bis(isooctyl thioglycolate)], or Compound XXIII [butyltin bis(isooctyl thioglycolate)]. In the Examples, the above-identified

compounds are used in a standard formulation which contains 100 parts by weight of a polyvinyl chloride homopolymer (Geon 103EP-F76, B. F. Goodrich Co.); 2.0 parts by weight of a processing aid which is an acrylic polymer consisting of 90% methyl acrylate and 10% ethyl acrylate (K120N, Rohm and Haas Co.); 7.0 parts by weight of a acrylic impact modifier (KM 323B, Rohm and Haas Co.); 1.0 part by weight of a paraffin wax (Rosswax 165, F. B. Ross Co.); 0.1 part by weight of a partially saponified ester wax (Wax OP, American Hoechst Co.), 1.5 parts by weight of calcium stearate, 10.0 parts by weight of titanium dioxide; and stabilizer components as indicated (all amounts in parts by weight). The resin mixtures are dry blended in a Waring Commercial Blender and their dynamic heat stability determined on a Brabender.

Example I

| (Parts) | (Stabilizer Components) |
|---|---|
| 1.10 | sulfur-bridged organotin compound (X) |
| 0.15 | alkaline earth metal salt of mercaptan (I) |
| 0.25 | overbased organic complex |

(a) Dynamic heat stability testing of the above resulted in failure within 27 minutes.

(b) When the same three components are used but in parts respectively of 1.00, 0.15 and 0.35, the period before failure increased to 28 minutes. When Compound X alone is

used as a stabilizer for the same polymer, a level of 1.50 parts is required to attain a 27 minute failure level.

Example II

| (Parts) | (Stabilizer Components) |
|---|---|
| 1.0 | sulfur-bridged organotin compound (XI) |
| 0.25 | alkaline earth metal salt of mercaptan (II) |
| 0.25 | overbased organic complex |

No failure of the test composition was observed employing the above components for 28 minutes. A loading of 1.5 parts of Compound XI alone was required to provide a rating of only 25 minutes.

Example II

| (Parts) | (Stabilizer Components) |
|---|---|
| 0.45 | organotin mercaptoacid ester (XVII) |
| 0.20 | organotin mercaptoacid ester (XVI) |
| 0.10 | organotin sulfide (VI) |
| 0.75 | alkaline earth metal salt of mercaptan (II) |

(a) Failure time for a composition stabilized with the above was 28 minutes.

(b) When the same components were used in parts respectively of 0.65, 0.35, 0.10 and 0.40, failure time is increased to 32 minutes.

(c) When the same components were used in parts respectively of 0.60, 0.30, 0.10, 0.30 and 0.20 of the

overbased organic complex is included, failure time is also 32 minutes.

These exemplifications compare favorably to a control containing only the first three listed ingredients in parts respectively of 0.90, 0.45 and 0.15 which fails at 28 minutes.

In addition to dynamic heat stability tests, color inhibiting performance was run on certain samples. The samples were withdrawn from the Brabender at three minute intervals and rated visually. The samples of Example I showed yellowing after 15 minutes as did each of the controls containing only the sulfur-bridged organotin compound as a stabilizer. All other samples (including run b of Example I) remained colorless through the fifteen minute test.

Example IV

| (Parts) | (Stabilizer Components) |
|---|---|
| 0.54 | organotin mercaptoacid ester (XVI) |
| 0.58 | organotin mercaptoacid ester (XVII) |
| 0.04 | organotin sulfide (VII) |
| 0.09 | organotin sulfide (VI) |
| 0.25 | alkaline earth metal salt of mercaptan (II) |

(a) Failure time for a composition stabilized with the above was 6 minute better than the control consisting of 1.5 parts of a mixture of (XVI), (XVII), (VII) and (VI) in the same ratio to each other as above.

(b) When the second and fourth of the listed ingredients were omitted and the others used in the parts respectively of 0.86, 0.14, and 0.50, failure time was also 9 minutes better than control consisting of 1.5 parts of a mixture of (XVI) and (VII) in the same ratio to each other as above.

Example V

| (Parts) | (Stabilizer Components) |
|---|---|
| 1.01 | organotin mercaptoacid ester (XX) |
| 0.19 | organotin sulfide (VIII) |
| 0.30 | alkaline earth metal salt of mercaptan (V) |

Dynamic heat stability testing of the above resulted in a failure time that was 4 minutes better than the control consisting of 1.5 parts of a mixture of (XX) and (VIII) in the same ratio to each other as above.

Example VI

| (Parts) | (Stabilizer Components) |
|---|---|
| 1.05 | sulfur-bridged organotin compound (XII) |
| 0.45 | alkaline earth metal salt of mercaptan (IV) |

The above test composition was 8 minutes better than 1.5 parts of the control (XII).

## Example VII

| (Parts) | (Stabilizer Components) |
|---|---|
| 0.68 | organotin mercaptoacid ester (XVIII) |
| 0.28 | organotin mercaptoacid ester (XIX) |
| 0.09 | organotin sulfide (VII) |
| 0.45 | alkaline earth metal salt of mercaptan (IV) |

Failure time for a composition stabilized with the above was 7 minutes better than the control consisting of 1.5 parts of a mixture of (XVIII), (XIX), and (VII) in the same ratio to each other as above.

## Example VIII

| (Parts) | (Stabilizer Components) |
|---|---|
| 1.10 | sulfur-bridged organotin compound (XIII) |
| 0.40 | alkaline earth metal salt of mercaptan (I) |

Failure time for a composition stabilized with the above was 4 minutes better than the 1.5 parts of the control, (XIII).

## Example IX

| (Parts) | (Stabilizer Components) |
|---|---|
| 1.00 | organotin mercaptoacid ester (XXI) |
| 0.12 | organotin sulfide (IX) |
| 0.20 | alkaline earth metal salt of mercaptan (V) |
| 0.18 | over-based organic complex |

Failure time for a composition stabilized with the above was 10 minutes better than the control consisting of 1.5 parts of a mixture of (XXI) and (IX) in the same ratio to each other as above.

Example X

| (Parts) | (Stabilizer Components) |
|---|---|
| 0.69 | organotin mercaptoacid ester (XIV) |
| 0.23 | organotin mercaptoacid ester (XV) |
| 0.10 | organotin sulfide (VI) |
| 0.07 | organotin sulfide (VII) |
| 0.41 | alkaline earth metal salt of mercaptan (I) |

Failure time for a composition stabilized with the above was 7 minutes better than the control consisting of 1.5 parts of a mixture of (XIV), (XV), (VI), and (VII) in the same ratio to each other as above.

Example XI

| (Parts) | (Stabilizer Components) |
|---|---|
| 0.85 | organotin mercaptoacid ester (XXII) |
| 0.17 | organotin mercaptoacid ester (XXIII) |
| 0.08 | organotin sulfide (VIII) |
| 0.04 | organotin sulfide (IX) |
| 0.21 | alkaline earth metal salt of mercaptan (I) |
| 0.15 | overbased organic complex |

Failure time for a composition stabilized with the above was 11 minutes better than the control consisting of 1.5 parts of a mixture of (XXII), (XXIII), (VIII), and (IX) in the same ratio as above.

Example XII

| (Parts) | (Stabilizer Components) |
|---|---|
| 1.0 | sulfur-bridged organotin compound (XI) |
| 0.25 | alkaline earth metal salt of mercaptan (II) |
| 0.25 | overbased organic complex |

No failure of the test composition was observed employing the above components for 28 minutes. If a mixture of 0.65 parts of compound XVI and 0.45 parts of compound XVII are substituted for the sulfur-bridged organotin compound XI in the above composition, only 14 minutes of stability result .

Example XIII

| (Parts) | (Stabilizer Components) |
|---|---|
| 0.45 | organotin mercaptoacid ester (XVII) |
| 0.20 | organotin mercaptoacid ester (XVI) |
| 0.10 | organotin sulfide (VI) |
| 0.75 | alkaline earth metal salt of mercaptan (II) |

The failure time for a composition stabilized with the above was 28 minutes. If a mixture of 0.5 part of XVII and 0.25 part of compound XVI is used in place of compounds

XVII, XVI, and VI in the above composition, only 12 minutes of stability result.

Example XIV

| (Parts) | (Stabilizer Components) |
| --- | --- |
| 1.01 | organotin mercapto ester (XX) |
| 0.19 | organotin sulfide (VIII) |
| 0.30 | alkaline earth metal salt of mercaptan (V) |

Dynamic heat stability testing of the above composition was 4 minutes better than a similar composition where compound XX and VIII above were replaced with 1.2 parts of compound XX.

Example XV

| (Parts) | (Stabilizer Components) |
| --- | --- |
| 1.10 | sulfur-bridged organotin compound (XIII) |
| 0.40 | alkaline earth metal salt of mercaptan (I) |

Failure time for a composition stabilized with the above was 4 minutes better than a similar composition containing 0.65 part of compound XV and 0.45 part of compound XIV in place of compound XIII.

## Example XVI

| (Parts) | (Stabilizer Components) |
|---|---|
| 0.85 | organotin mercaptoacid ester (XXII) |
| 0.17 | organotin mercaptoacid ester (XXIII) |
| 0.08 | organotin sulfide (VIII) |
| 0.04 | organotin sulfide (IX) |
| 0.21 | alkaline earth metal salt of mercaptan (I) |
| 0.15 | overbased organic complex |

Failure time for a composition stabilized with the above was 5 minutes better than a similar composition containing 0.95 part of compound XXII and 0.20 part of XXIII in place of compounds XXII, XXIII, VIII, and IX.

WHAT IS CLAIMED

1. A stabilizer composition of matter comprising a mixture of (a) an alkali or alkaline earth metal salt of a mercaptan or mercapto acid and (b) either (i) a sulfur-bridged organotin mercaptide or (ii) a combination of at least one organotin sulfide and at least one organotin mercaptide having a $-\overset{|}{\underset{|}{C}}-\overset{|}{\underset{|}{Sn}}-S-$ group, said composition having a weight ratio of (a) to (b) ranging between about 0.05:1 and about 3:1, with the proviso that up to about 99.5% by weight of the organotin sulfide identified above can be replaced by (c) at least one organotin mercaptide and with the further proviso that up to 96% by weight of (a) can be replaced by (d) an overbased organic complex of an alkali or alkaline earth metal base.

2. The composition of Claim 1 wherein the components are restricted to (a), (b) (i), and (d).

3. The composition of Claim 2 wherein (a) is selected from the barium or calcium salt of isooctyl thioglycolate, 2-mercaptoethyl stearate, dodecyl mercaptan, 2-mercaptoethyl oleate, and 2-mercaptoethyl tallate and (b) (i) has the following formula:

$$\begin{array}{c}(R^1)_a Sn(SR^2)_{3-a}\\ |\\ (S)_m\\ |\\ (R^3)_b Sn(SR^4)_{3-b}\end{array}$$

wherein a and b are independently 1 or 2, $R^1$ and $R^3$ are hydrocarbon radicals selected from the group consisting of alkyl of 1-18 carbons, cycloalkyl of 3-18 carbons, aryl of 6-18 carbons, and mixed alkyl-aryl of 7-18 carbons, wherein said hydrocarbon radicals optionally having substituents selected from the group consisting of

-CN, $OR^5$, $-\overset{O}{\overset{\|}{C}}R^5$ or $-\overset{O}{\overset{\|}{C}}-OR^5$ where $R^5$ is selected from an alkyl of 1-20 carbons, alkenyl of 2-20 carbons, cycloalkyl of 3-20 carbons, or mixed alkyl-aryl of 7-20 carbons, $R^2$ and $R^4$ are hydrocarbon radicals independently selected from alkyl of 1-22 carbons, cycloalkyl of 3-22 carbons, aryl of 6-22 carbons, or mixed alkyl-aryl of 7-22 carbons, optionally substituted by halogen,

-XH, $-XR^5$, $-\overset{X}{\overset{\|}{C}}-R^5$, $X\overset{Y}{\overset{\|}{C}}-R^5$, or $-\overset{Y}{\overset{\|}{C}}-XR^5$ where $R^5$ is as defined above and both X and Y are independently selected from oxygen and sulfur, and m ranges from about 1 to about 10.

4. The composition of Claim 1 wherein the components are restricted to (a), (b), (ii), (c), and (d).

5. The composition of Claim 4 wherein (a) is selected from the barium or calcium salt of isooctyl thioglycolate, 2-mercaptoethyl stearate, dodecyl mercaptan, 2-mercaptoethyl oleate, and 2-mercaptoethyl tallate, (b) (ii) is selected from methyltin sesquisulfide, dimethyltin sulfide, dibutyltin sulfide, butyltin sesquisulfide, octyltin sesquisulfide, and dioctyltin sulfide, and (c) is selected from one or more of dimethyltin bis(isooctyl thioglycolate), monomethyltin tris(isooctyl thioglycolate), methyltin tris(2-mercaptoethyl stearate), dimethyltin bis(2-mercaptoethyl stearate), methyltin tris(2-mercaptoethyl oleate), dimethyltin bis(2-mercaptoethyl oleate), dibutyltin bis(2-mercaptoethyl tallate), butyltin tris(2-mercaptoethyl tallate), dibutyltin bis(isooctyl thioglycolate), butyltin tris(isooctyl thioglycolate), octyltin tris(isooctyl thioglycolate), and dioctyltin bis(isooctyl thioglycolate).

6. A polyvinyl chloride composition wherein a heat stabilizer forms from about .05% to about 10% by weight of said polyvinyl chloride, said heat stabilizer comprising a mixture of (a) an alkali or alkaline earth metal salt of a mercaptan or mercapto acid and (b) either (i) a sulfur-bridged organotin mercaptide or (ii) a combination of at least one organotin sulfide and at least one organotin mercaptide having a $-\overset{|}{\underset{|}{C}}-\overset{|}{\underset{|}{Sn}}-S-$group, said composition having a weight ratio of (a) to (b) ranging between about 0.05:1 and about 3:1, with the proviso that up to about 99.5% by weight of the organotin sulfide identified above can be replaced by (c) at least one organotin mercaptide and with the further proviso that up to 96% by weight of (a) can be replaced by (d) an overbased organic complex of an alkali or alkaline earth metal base.

7. The composition of Claim 6 wherein said heat stabilizer constitutes from about 0.25% to about 5.0% by weight based on said polyvinyl chloride resin.